Europäisches Patentamt

European Patent Office

Office européen des brevets

(11) Publication number: **0 237 954 B1**

## EUROPEAN PATENT SPECIFICATION

(45) Date of publication of patent specification: **17.06.92**   (51) Int. Cl.⁵: **G11B 5/64**, G11B 5/704

(21) Application number: **87103547.3**

(22) Date of filing: **11.03.87**

(54) **A magnetic recording medium having an extremely thin total thickness.**

(30) Priority: **20.03.86 JP 63156/86**

(43) Date of publication of application:
**23.09.87 Bulletin 87/39**

(45) Publication of the grant of the patent:
**17.06.92 Bulletin 92/25**

(84) Designated Contracting States:
**DE FR GB NL**

(56) References cited:
**EP-A- 0 090 499**
**EP-A- 0 102 581**
**DE-A- 3 525 170**
**FR-A- 2 257 403**
**US-A- 4 112 187**

**PATENT ABSTRACTS OF JAPAN, vol. 9, no. 72 (P-345)[1795], 2nd April 1985; & JP-A-59 203 230 (TEIJIN K.K.) 17-11-1984**

**PATENT ABSTRACTS OF JAPAN, vol. 9, no. 265 (P-399)[1988], 23rd October 1985, page 71 P 399; & JP-A-60 113 315 (TEIJIN K.K.) 19-06-1985**

(73) Proprietor: **SONY CORPORATION**
**7-35 Kitashinagawa 6-Chome Shinagawa-ku Tokyo 141(JP)**

(72) Inventor: **Chiba,Kazunobu,c/o Sony Magnetic Products Inc.**
**5-6, Kitashinagawa, 6-chome Shinagawa-ku,Tokyo(JP)**

(74) Representative: **TER MEER - MÜLLER - STEINMEISTER & PARTNER**
**Mauerkircherstrasse 45**
**W-8000 München 80(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

BACKGROUND OF THE INVENTION

Field of the Invention

The present invention relates to a magnetic recording medium having a ferromagnetic metal or alloy thin film magnetic layer formed on a nonmagnetic film substrate.

Description of the Prior Art

The magnetic recording medium so far widely used in the art is a so-called coating type in which ferromagnetic powders such as $\gamma$-$Fe_2O_3$, Co-containing $\gamma$-$Fe_2O_3$, $CrO_2$ or metal iron powder are dispersed in an organic binder such as vinyl chloride-vinyl acetate copolymer, polyester resin or poly-urethane resin to produce a magnetic paint which is then coated on a nonmagnetic substrate and dried to produce a magnetic layer.

EP-A-0 102 581 discloses a magnetic recording material comprising a film of a polyester (thickness of 2 to 12 $\mu$m, Young's modulus of 550 to 2000 kg/mm$^2$) and having a magnetic layer of 0.05 to 5 $\mu$m (500 to 50.000 Å) on at least on side of the film.

While to meet the demand for a high-density magnetic recording, a so-called ferromagnetic metal thin film type magnetic recording tape has been studied and developed extensively.

In the ferromagnetic metal thin film type magnetic recording medium, ferromagnetic metal or alloy is deposited on a nonmagnetic substrate by a physical vapor deposition technique, such as vacuum evaporation, sputtering or ion plating.

The metal thin film type magnetic recording medium has a number of advantages. The magnetic characteristics are superior in coercive force and residual magnetic flux density. The packing density of the magnetic material can be made large because nonmagnetic binder material is not used in the magnetic layer. Because of the superior magnetic characteristics, the metal thin film magnetic layer can be made thin, the disadvantage caused by the demagnetization of the layer upon recording and thickness loss upon playback can be avoided. Thus the metal thin film type magnetic recording medium is expected as a desirable medium for high density recording such as a compact VTR (Video 8) recently introduced.

The recording capacity for longer recording time in a predetermined cassette case size is a recent demand in the art. In a tape cassette, magnetic tape is wound on a reel and transported from a supply reel to a take-up reel, thus for a longer recording time the magnetic tape must be made thin. The thickness of the magnetic tape must be less than about 9 $\mu$m or as thin as 6 to 7 $\mu$m for a 3 to 4 hours recording capacity in a predetermined cassette in which a magnetic recording tape of 2 hours recording capacity is enclosed therein, which has a thickness about 13 $\mu$m.

In making the recording medium more and more thin several problems have been encountered which must be overcome.

It was experimentally found that the output level from a thin magnetic tape having a total thickness of 6 to 7 $\mu$m on a VTR after a standard magnetic tape having a total thickness of 13 $\mu$m was loaded and passed on the VTR was smaller than the output from the thin magnetic tape on the VTR before the standard magnetic tape was loaded and passed. It is considered that the contact characteristics between the magnetic tape and a magnetic transducer head are different depending on the magnetic tapes due to the difference of the stiffness of the magnetic tapes, and a contact surface shape is conformed to meet each of magnetic tapes by passing the magnetic tape on the magnetic head for a certain period of time. In an experiment conducted by the inventor, ferromagnetic metal thin film type magnetic tapes having total thickness of 13 $\mu$m and 7 $\mu$m respectively were prepared. The thick magnetic tape (13 $\mu$m) and the thin magnetic tape (7 $\mu$m) were loaded on a VTR alternately and outputs from these tapes were measured. Then it was found that the output deterioration of 3 to 4 dB was observed just after the tape was changed from the thicker one to the thinner one or the thinner one to the thicker one.

OBJECT AND SUMMARY OF THE INVENTION

Accordingly it is an object of the present invention to provide an improved ferromagnetic metal thin film type magnetic recording medium having extremely thin total thickness.

It is another object of the present invention to provide a ferromagnetic metal thin film type magnetic recording medium to enable longer time recording capacity in a predetermined cassette case.

It is further object of the present invention to provide a ferromagnetic metal thin film type magnetic recording medium having equivalent contact characteristics with a magnetic transducer head to a magnetic recording tape having larger thickness to obtain equivalent electromagnetic conversion characteristics.

According to one aspect of the present invention, there is provided a magnetic recording medium which comprises a nonmagnetic film substrate and a magnetic layer formed on the substrate. The nonmagnetic film substrate has a thickness between 3.5. and 9 $\mu$m and F-5 value not smaller than 20 Kg/mm$^2$. The magnetic layer is formed of a ferromagnetic metal or alloy thin film having a thickness between 170 and 300 nm (1700 and 3000 Å).

## BRIEF DESCRIPTION OF THE DRAWINGS

Fig. 1 is an enlarged cross-sectional view showing a structure of a ferromagnetic metal thin film type magnetic recording medium,

Fig. 2 is a schematic illustration for explaining a method for measuring an envelope waveform, and Fig. 3A and 3B are schematic illustrations of envelope waveform.

## DESCRIPTION OF THE PREFERRED EMBODIMENTS

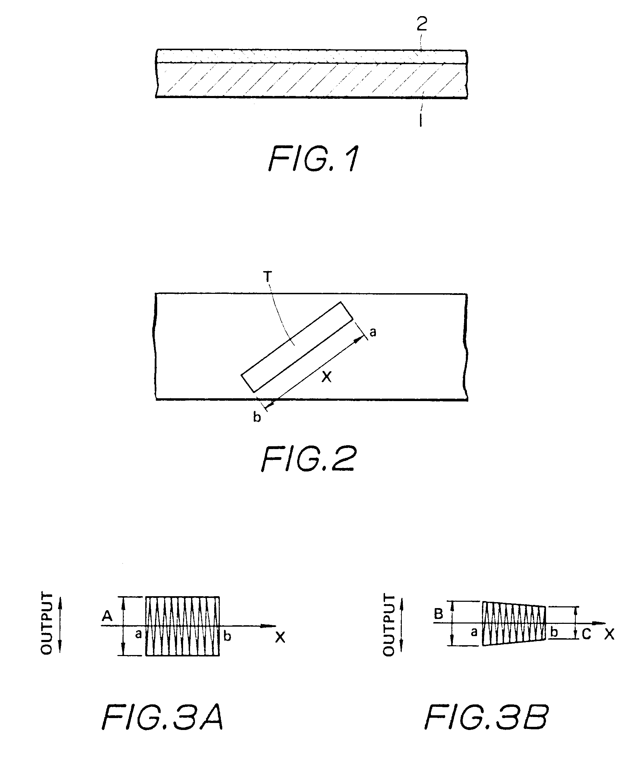

The magnetic recording medium of the present invention has a structure as shown in Fig. 1, in which a magnetic layer (2) is formed on a nonmagnetic film substrate (1). The magnetic layer is formed of a ferromagnetic metal or alloy thin film.

The F-5 value (force to elongate 5%) of the nonmagnetic film substrate (1) is not smaller than 20 Kg/mm$^2$. By selecting the material having thus larger F-5 value, strong stiffness can be ensured, even the thickness is small. Examples of such film material having F-5 value not smaller than 20 Kg/mm$^2$ are, aromatic polyamide resin (F-5 value 20 Kg/mm$^2$), polyethylene-2, 6-naphthalate (21 Kg/mm$^2$), super tensilized film, and so on.

A thickness of the nonmagnetic film substrate (1) is between 3.5 and 9 $\mu$m. Since, a polymer film thinner than 3.5 $\mu$m is very difficult to manufacture and still difficult to ensure enough stiffness of the tape, while the thickness exceeding 9 $\mu$m is not practically desirable for long recording.

A thickness of the magnetic layer (2) formed of a ferromagnetic metal or alloy thin film is between 170 and 300 nm (1700 and 3000 Å). When the thickness is less than 170 nm (1700 Å), contribution to a stiffness of the magnetic tape by the magnetic layer is not enough to obtain a good contact characteristics between the tape and the magnetic head resulting in a deteriorated output envelope waveform, while the thickness is larger than 300 nm (3000 Å), noise in output signal increases and C/N at short wavelength signal band is deteriorated.

The ferromagnetic metal or alloy materials used for the ferromagnetic metal thin film magnetic layer (2) may be ferromagnetic metal, such as, Fe, Co, Ni, or ferromagnetic alloy, such as, Fe-Co, Co-Ni, Fe-Co-Ni, Fe-Cu, Co-Cu, Co-Au, Co-Pt, Mn-Bi, Mn-Al, Fe-Cr, Co-Cr, Ni-Cr, Fe-Co-Cr, Co-Ni-Cr, Fe-Co-Ni-Cr, and so on. The magnetic layer may be formed of a single layer of such material or multi-layer structure of such materials. An under layer between the film substrate (1) and the magnetic layer (2), and/or an intermediate layer in the magnetic layer (2) when it is formed of the multi layer structure may be provided additionally for the purpose of increasing the adhesion of the layers and controlling the coercive force of the magnetic layer. Further, a surface portion of the magnetic layer may be oxidized to improve abrasion characteistics.

The method for depositing the magnetic layer may be any one of the methods such as vacuum evaporation, ion plating and sputtering.

Further a back coating and lubricant coating may be provided to improve the running characteristics of the tape.

The present invention will be explained in detail with reference to specific examples.

Reference Tape

A magnetic layer having a thickness of 200 nm (2000 Å) was formed on one surface of a polyethyleneterephthalate film base having a thickness of 12 $\mu$m by vacuum evaporation of Co-Ni alloy consisting of 80 weight % Co and 20 weight % Ni in an oxygen containing atmosphere. The vacuum evaporation was carried out in such manner that evaporated alloy beam was slantly introduced onto the film base transported along a guide roll surface. The polyethyleneterephthalate film employed has F-5 value of 10 Kg/mm$^2$. On another surface of the film base, a back coating layer having a dry thickness of 0.8 $\mu$m was formed by coating a paint containing carbon black, vinyl chloride-vinyl acetate copolymer and oleic acid.

3

The film base having the magnetic layer and the back coating layer was slit into 8 mm width to make a reference magnetic tape.

Example

A magnetic layer having a thickness of 200 nm (2000 Å) was formed on one surface of an aromatic polyamide resin film base having a thickness of 6 $\mu$m and having F-5 value of 20 Kg/mm$^2$ by the method used in making the reference magnetic tape. On another surface of the film base, a back coating layer having a dry thickness of 0.8 $\mu$m was coated as explained in making the reference magnetic tape. A sample magnetic tape was obtained by slitting the film into 8 mm width.

Comparison Example 1

A comparison sample tape 1 was made as described in the above example except by using a polyethyleneterephthalate film which has F-5 value of 10 Kg/mm$^2$ instead of the aromatic polyamide film base of the example.

Comparison Example 2

A comparison sample tape 2 was made as described in the above example except by using a tensilized polyethyleneterephthalate film base having F-5 value of 15 Kg/mm$^2$ instead of the aromatic polyamide film base of the example.

Comparison Example 3.

A comparison sample tape 3 was made as explained in the above example except the thickness of the magnetic layer was made 100 nm (1000 Å).

A color bar signal was recorded on each of the reference tape, the sample tape and comparison sample tapes 1 to 3. First, the reference tape was loaded on a VTR and passed for 100 hours. After the 100 hours pass of the reference tape, the sample tape was loaded on the VTR and signal were reproduced from the sample tape. The deviation of the output was examined by measuring the envelope waveform. Similarly, output deviation was measured on the comparison sample tapes 1 to 3, each measurement was carried out on a VTR on which 100 hours pass of the reference tape was carried out, just before the measurements. The measurement for the deviation of output was carried out by the following method. The envelope waveform was measured by scanning a magnetic playback head along a recorded track T on the magnetic tape from one end a to another end b following the arrow x in Figure. 2. The output envelope obtained from tape other than the reference tape was shown in Figure 3A when the measurement was carried out before 100 hours pass of reference tape, while the output envelope obtained was deteriorated as shown in Fig. 3B after 100 hours pass of the reference tape. As shown in Figure 3B, there is a portion having a smaller output level due to the poor contact of the magnetic tape to the magnetic playback head. The minimum level C of the output affects the picture quality greatly.

Thus the head and tape contact property was examined by the output deviation defined by the following formula (1),

Output deviation $= 20 \log \frac{C}{A}$ (dB)     (1)

in which A is an output level from the magnetic tape before 100 hours pass of the reference tape and C is the minimum output level from the magnetic tape after 100 hours pass of the reference tape. The results are shown in Table I.

Table  I

| | F-5 value $(Kg/mm^2)$ | thickness of magnetic layer | output deviation |
|---|---|---|---|
| Example | 20 | 200 nm (2000 Å) | -1.3 dB |
| Comparison Example 1 | 10 | 200 nm (2000 Å) | -2.5 dB |
| "  2 | 15 | 200 nm (2000 Å) | -2.0 dB |
| "  3 | 20 | 100 nm (1000 Å) | -2.3 dB |

Next, output deviation of the reference tape was measured after 100 hours pass of each of the sample tape and comparison sample tapes 1 to 3. The results were shown in Table II.

Table  II

| | | sample tape | output deviation after passing sample tape |
|---|---|---|---|
| Reference tape | | Example | -1.2 dB |
| | | Comparison example  1 | -2.0 dB |
| | | "  2 | -1.7 dB |
| | | "  3 | -2.2 dB |

As shown in Tables I and II, the sample tape of the present invention shows that the output deviation is very small which overcomes the difference of the contact property between tape and head with the reference tape.

Contrary, the comparison sample tapes 1 and 2, which have smaller F-5 value, and comparison sample tape 3 which has thinner metal magnetic layer shows considerably large output deviation due to the difference of contact property between tape and head as compared with the reference tape.

As apparent from the foregoing explanation, in the magnetic recording medium of the present invention, the F-5 value of the nonmagnetic film base is selected not smaller than 20 $Kg/mm^2$ and a thickness of the metal thin film magnetic layer is selected between 170 and 300 nm (1700 and 3000 Å), even the thickness of the nonmagnetic substrate is made thin between 3.5 and 9 $\mu$m, the magnetic recording medium has a stiffness equivalent to the stiffness of the magnetic recording medium ordinarily used which has a thickness of about 13 $\mu$m. Thus the difference of contact property between the tape and the head due to thickness difference is avoided.

Accordingly, the magnetic recording medium has longer recording capacity in a predetermined cassette, and is compatible with the ordinary magnetic tape having larger thickness.

**Claims**

1.  A magnetic recording medium comprising a nonmagnetic film substrate, and a magnetic layer formed on said substrate, said nonmagnetic film substrate having a thickness between 3.5 and 9 $\mu$m and having a F-5 value not smaller than 20 $Kg/mm^2$, and said magnetic layer having a thickness between 170 and 300 nm (1700 and 3000 Å) and being formed of a ferromagnetic metal or alloy thin film.

2. A magnetic recording medium according to claim 1, said nonmagnetic film substrate is formed of aromatic polyamide resin film.

3. A magnetic recording medium according to claim 1, said nonmagnetic film substrate is formed of polyethylene-2, 6-naphthalate film.

4. A magnetic recording medium according to claim 1, said magnetic layer is formed of Co-Ni alloy slantly deposited on said substrate by vacuum deposition.

**Revendications**

1. Un support d'enregistrement magnétique comprenant un substrat de film non magnétique et une couche magnétique formée sur ledit substrat, ledit substrat de film non magnétique ayant une épaisseur comprise entre 3,5 et 9 $\mu$m et une valeur F-5 non inférieure à 20 kg/mm$^2$, et ladite couche magnétique ayant une épaisseur comprise entre 170 et 300 nm (1 700 et 3 000 Å) et étant formée d'un film mince de métal ou d'alliage ferromagnétique.

2. Un support d'enregistrement magnétique selon la revendication 1, selon lequel ledit substrat de film non magnétique est formé d'un film de résine de polyamide aromatique.

3. Un support d'enregistrement magnétique selon la revendication 1, selon lequel ledit substrat de film non magnétique est formé d'un film de 2,6-naphtalate de polyéthylène.

4. Un support d'enregistrement magnétique selon la revendication 1, selon lequel ladite couche magnétique est formée d'un alliage de Co-Ni déposé de façon inclinée sur ledit substrat par dépôt sous vide.

**Patentansprüche**

1. Magnetisches Aufzeichnungsmedium mit einem nichtmagnetischen Foliensubstrat und einer auf dem Substrat ausgebildeten Magnetschicht, wobei das nichtmagnetische Foliensubstrat eine Dicke zwischen 3,5 und 9 $\mu$m und einen F-5-Wert von nicht weniger als 20 kg/mm$^2$ aufweist und die Magnetschicht eine Dicke zwischen 170 und 300 nm (1700 und 3000 Å) besitzt und aus einem Dünnfilm aus einem ferromagnetischen Metall oder einer ferromagnetischen Metallegierung gebildet ist.

2. Magnetisches Aufzeichnungsmedium nach Anspruch 1, worin das nichtmagnetische Foliensubstrat aus einer Folie aus einem aromatischen Polyamidharz gebildet ist.

3. Magnetisches Aufzeichnungsmedium nach Anspruch 1, worin das nichtmagnetische Foliensubstrat aus einer Polyethylen-2,6-naphthalat-Folie gebildet ist.

4. Magnetisches Aufzeichnungsmedium nach Anspruch 1, worin die Magnetschicht aus einer Co-Ni-Legierung gebildet ist, die durch Schräg-Vakuumabscheidung auf dem Substrat abgeschieden worden ist.

FIG.1

FIG.2

FIG.3A

FIG.3B